# EUROPEAN PATENT APPLICATION

(11) **EP 2 405 635 A1**
(43) Date of publication of application: **11.01.2012**
(21) Application number: 11173057.8
(22) Date of filing: 07.07.2011
(51) Int. Cl.: H04M 3/487

(54) **Device for automatic short and medium range transmission of information**

(30) Priority: 07.07.2010 IT FI20100143
(71) Applicant: Cecconi, Matteo, 59100 Prato (IT); Bardazzi, Marco, 59100 Prato (IT)
(72) Inventor: Cecconi, Matteo, 59100 PRATO (IT)
(74) Representative: Gervasi, Gemma

(57) **Abstract**

A device for transmitting data and information in wireless broadcasting mode, comprising: power supplying means, means adapted to store said information, means adapted to implement the storage of said information, means for transmitting said information to wireless-type devices in broadcast mode.

## Description

### FIELD OF THE INVENTION

This invention relates to the field of data and information transmission, in particular to devices for short-range transmission of data and information, capable of transferring information for the purposes of advertising, commercial or professional representation, and public information.

### PRIOR ART

An ever increasing percentage of information, compared to the total, is produced, stored and distributed in electronic format. Any document can be digitised and transmitted in electronic form, thus reducing management costs and greatly simplifying the distribution methods. This has been given further impetus by so-called "wireless" technology, which has simplified the transmission of digital data between users equipped with appropriate mobile devices. Examples of these wireless technologies are now very numerous, from GPRS and UMTS systems developed protocols for cellular telephony to the Wi-Fi, Bluetooth, ZigBee and other protocols for short-range communications, and the WiMAX protocol for longer-range transmissions.

There is also very wide availability of mobile devices capable of exchanging data and information by wireless means: cellular telephones, portable computers, notebooks, netbooks, handheld computers, and music and video players for digital formats capable of wireless communication.

The distribution of data in digital format and the spread of mobile devices capable of using such digital data by wireless means now makes possible, therefore, the widespread transmission of data and information to a very large number of users. The object of this invention is an apparatus and a method of transmission, in "broadcast" mode, capable of transmitting data and information to the mobile wireless device of a user via one of the known short-range and medium-range communication protocols.

Said apparatus can be advantageously installed in proximity to places in which it is important to request and receive information such as, for example, offices and commercial premises, public information and public administration offices, tourist sites, museums, cinemas and places of recreation and entertainment, stations and airports, supermarkets and shopping centres, and wherever it is necessary to transfer information and data to users or potential users of products and/or services.

The communication, from offices or commercial premises to customers, consumers and users, of data and information such as business cards, menus, brochures, coupons, promotional information and advertising, travel information, timetables and route information, etc., may, if performed in the conventional manner, be ineffective and wasteful in terms of time and costs. The invention according to this application resolves this problem by using a method and an apparatus capable of making such information available immediately and securely to users equipped with wireless communication devices by sending data and information in digital format.

By means of the invention in question, the receiving of, storage of and access to this type of information becomes easier and more manageable - both for the user and for the manager of the device according to the invention - than traditional print media on a physical medium.

### BRIEF DESCRIPTION OF THE FIGURES

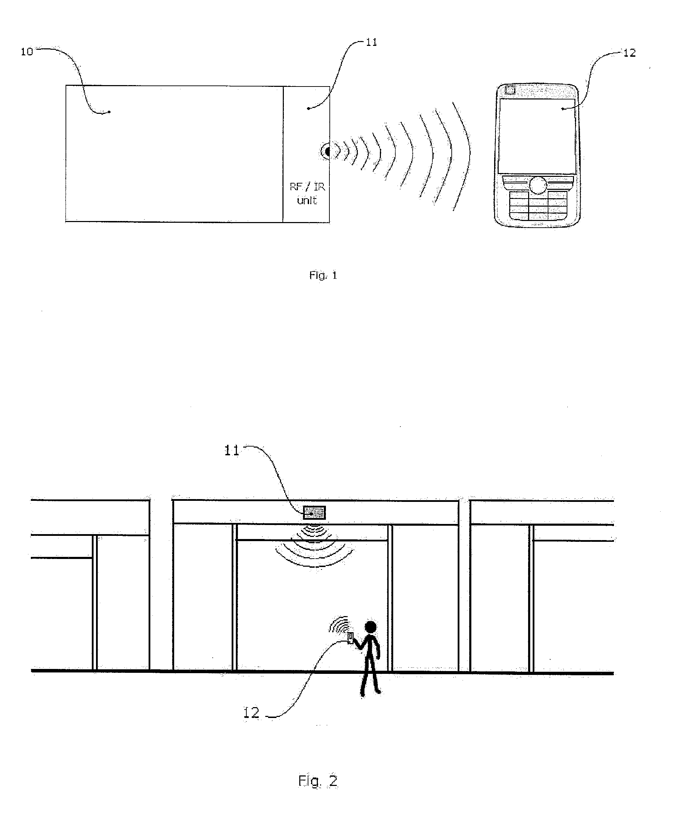

Figure 1 illustrates a block diagram of the device according to this invention in conjunction with a mobile wireless-type device.
Figure 2 illustrates a schematic drawing of the mode of interaction between the device according to this invention, installed in proximity to the entrance of a commercial property, and a user equipped with a mobile wireless-type device.

### SUMMARY OF THE INVENTION

The invention describes a wireless device for the transmission of information in broadcast mode, comprising a means suitable for storing said information, means of storing said information, and means of transmitting such information to wireless-type devices.

The device that is the object of this invention may include an external or built-in power source and may include means suitable for performing the programming of the mode of transmission.

A further aspect of the invention relates to a plurality of devices, according to this invention, that are connected to a central unit, said central unit being capable of sending, to any device among said plurality of devices, information to be disseminated in broadcast mode to users equipped with wireless-type communication devices. Said central unit can advantageously be equipped with means of connection to the Internet such that it can be programmed remotely.

### DETAILED DESCRIPTION OF THE INVENTION

The device according to this invention for transmitting data and information in wireless broadcasting mode, comprising: power supplying means, means adapted to store said information, means adapted to implement the storage of said information, means for transmitting said information to wireless-type devices in broadcast mode.

In a preferred embodiment, the device according to this invention further comprises means for managing said information, connection means to electronic processing means, such as personal computers, means for receiving data from said wireless-type devices and connection means to intranet or Internet-type networks.

Said means of transmitting said information to wireless-type devices preferably comprise an IR or RF-type transmission unit to be installed in proximity to the entrance of the property or office or the information board and capable of disseminating, in broadcast mode, data and information with a certain transmission, range. Said RF-type transmission unit may be implemented via a technology such as RFID, Bluetooth, Wi-Fi or ZigBee, etc.

The device according to this invention is thus capable of containing appropriately stored information and transmitting it in wireless broadcast mode to all wireless-type devices in its transmission range. These wireless-type devices include cellular telephones, portable computers, notebooks, netbooks, handheld computers, and music and video players for digital formats capable of wireless communication, satellite navigation systems, etc. Said device may also comprise a connection to a personal computer, said personal computer being suitable for programming functions and activities of the device according to this invention and for transferring the data thereto which are to be transmitted in wireless broadcast mode.

In addition, the device according to this invention may include means of connection to Internet or intranet-type networks so that it can be managed and controlled remotely. More particularly, the device according to this invention may comprise data network connection and sharing means, wherein said information is stored and subsequently sent to said wireless-type devices in broadcast mode.

A further aspect of the invention relates to a plurality of devices according to this invention, that are connected to a central unit - directly or via an Internet connection - said central unit being capable of sending, to any device among said plurality of devices, information to be disseminated in broadcast mode to users equipped with wireless-type communication devices. Said central unit can advantageously be equipped with means of connection to the Internet such that it can be programmed remotely.

During the formal operation of the device according to this invention, said data and information are automatically transmitted in broadcast mode to users equipped with said wireless-type devices. In turn, said wireless-type devices will automatically receive the data and information sent by the device according to this invention, if they are capable of doing so; otherwise the user will, from time to time, enable their reception. Said data and information may, for example, include business cards, in the event that the object of this invention is installed at professional offices, may include information brochures about products, menus and special offers, in the event that the object of this invention is installed in offices or commercial premises, and may include forms and information circulars, in the event that the object of this invention is installed in public information or public administration offices. The storage may also be automatic, depending on the setting chosen by the owner of the wireless device. In this case, the data will be saved automatically in the memory of the wireless device and archived in accordance with intuitive storage criteria, subdivided and sorted into categories from more general categories to more specialised categories. Examples of items are: restaurant, medical, other professional, train, aircraft, underground railway, museum, etc.

Each user equipped with a wireless-type device will be capable of receiving the information on his device, reading it, storing it and then downloading it to his personal computer in his home.

This transmission may occur, for example, at the time when a user is located near to a shop window of a commercial property, or passes through the entrance of an office, or even stops in front of an information map showing the routes and times of a public transport service.

Such transmission may be used for advertising purposes, for commercial or professional representation, and for public information. Examples of advertising purposes are: the sending to users of a commercial property of information about its products, sales promotions and the like. Examples of professional representation are: the sending of contact details (business cards) to customers who access a professional studio. Examples of public information are: the sending to the users of a public transport company of the timetable of the transport service. In this way, from the point of view of the user, it is no longer necessary to collect business cards, information brochures and forms of various types in paper format, which require more space and are more difficult to archive and manage. Moreover, from the point of view of the manager of the device that is the object of this invention, it will be easier and less costly to keep up to date and to distribute the information material intended for users and customers.

## Claims

1. A device for transmitting data and information in wireless broadcasting mode, comprising: power supplying means, means adapted to store said information, means adapted to implement the storage of said information, means for transmitting said information to wireless-type devices in broadcast mode.

2. A device according to claim 1, further comprising means for managing said information, connection means to electronic processing means, such as personal computers, means for receiving data from said wireless-type devices and connection means to Intranet or Internet type networks.

3. A device according to claims 1-2, wherein said means for transmitting said information to wireless-type devices preferably comprise an IR or RF type transmission unit.

4. A device according to claims 1-3, further comprising a connection to a personal computer, said personal computer being adapted to program functions and activities of said device and transfer data thereto, which are to be transmitted in wireless broadcast mode.

5. A device according to claims 1-4, further comprising connection means to Internet or Intranet type networks.

6. A device according to claim 5, further comprising data network connection and sharing means, wherein said information is stored and then sent to said wireless-type devices in broadcast mode.

7. An apparatus for transmitting data and information in wireless broadcasting mode, comprising a plurality of devices according to claims 1-6, and a central unit - associated with said plurality of devices - adapted to send information to each device of said plurality of devices, which information is to be disseminated in broadcast mode to users provided with wireless-type communication devices.

8. An apparatus according to claim 7, wherein said central unit comprises connection means to the Internet.
